# EUROPÄISCHE PATENTSCHRIFT

(11) **EP 4 646 925 B1**
(45) Veröffentlichungstag und Bekanntmachung des Hinweises auf die Patenterteilung: **09.12.2026**
(21) Anmeldenummer: 24174342.6
(22) Anmeldetag: 06.05.2024
(51) Int. Cl.: B65H 75/44, A01K 27/00

(54) **ROLLLEINENVORRICHTUNG FÜR DAS AB- UND AUFROLLEN EINER TIERLEINE**
ROLL-UP LEASH DEVICE FOR REELING AND UNCOILING AN ANIMAL LEASH
DISPOSITIF DE LAISSE À ENROULEUR POUR DÉROULER ET ENROULER UNE LAISSE POUR ANIMAL

(43) Veröffentlichungstag der Anmeldung: 12.11.2025
(73) Patentinhaber: Diligent Verwaltung GmbH, 51063 Köln (DE)
(72) Erfinder: TRAXLER, Christoph, 36093 Künzell (DE); WÜLBECK, Norbert, 59929 Brilon (DE)
(74) Vertreter: Zenz Patentanwälte Partnerschaft mbB

(56) Entgegenhaltungen:
- CN-U- 206 932 975
- CN-U- 221 468 689
- DE-U1- 212014 000 090
- US-B2- 8 516 979

## Beschreibung

Die Erfindung richtet sich auf eine Rollleinenvorrichtung für das Ab- und Aufrollen einer Tierleine, wobei die Rollleinenvorrichtung ein Gehäuse, einen drehbar an dem Gehäuse gelagerten Spulenkörper und eine Rückholfeder aufweist, wobei die Rückholfeder den Spulenkörper in eine Aufrollposition, in welcher die Tierleine (x) auf dem Spulenkörper aufgewickelt angeordnet ist, zurückdrängend oder zurückhaltend ausgebildet ist, wobei der Spulenkörper aus der Aufrollposition heraus gegen eine Rückholkraft der Rückholfeder für ein Abrollen der aufgewickelten Tierleine drehbar ist.

Eine derartige Rollleinenvorrichtungen wird üblicherweise auch als Flex-Leine oder als selbstaufrollende Tierleine bezeichnet. Bekannte Flex-Leinen bestehen meist aus einer Tierleine bzw. einem Band, welches auf einem Spulenkörper an einem gehäuseartigen Handgriff aufgewickelt ist. Am Ende der Tierleine bzw. des Bandes ist ein Karabinerhaken angeordnet, an welchem ein Halsband des auszuführenden Tieres befestigt wird. Der Spulenkörper weist eine Spiralfeder auf, welche die Tierleine selbsttätig aufrollt, wenn das Tier zu seinem Besitzer bzw. zu dem Leinenführer zurückläuft.

Läuft das Tier weit genug von dem Leinenführer und damit von der Rollleinenvorrichtung weg, so dass die Tierleine vollständig von dem Spulenkörper abgewickelt wird, so erfährt das Tier einen abrupten Ruck am Hals, wobei der Leinenführer den gleichen Ruck an der Hand oder in seinem Arm spürt, wobei hierbei dem Tier sogar Verletzungen zugefügt werden können. Zur Vermeidung dieser Gefahren und auch zu dem Zweck, dass Tier bereits vor Erreichen des Endes der abgewickelten Tierleine stoppen zu können, ist es aus dem Stand der Technik bekannt, Rollleinenvorrichtungen mit einem Bremsschalter auszustatten, welcher mechanisch in den Spulenkörper eingreift und ein weiteres Drehen des Spulenkörpers und damit Abrollen der Tierleine blockiert. Bekannt ist es auch, dass ein Bremsschalter das Drehen des Spulenkörpers bis zum Stillstand abbremst, wobei das Erreichen des Stillstandes sowie die Wirkung des Abbremsens von der vom Leinenführer aufgebrachten Kraft auf den Bremsschalter abhängig sind. Dabei ist es nicht besonders günstig, dass die mit Hilfe des Bremsschalters bewirkte Bremswirkung allein von der Kraft des Leinenführers abhängig ist. Rollleinenvorrichtungen für das Ab- und Aufrollen einer Tierleine werden zum Beispiel offenbart in Druckschrift US 8 516 979 B2, Druckschrift CN 206 932 975 U und in Druckschrift DE 21 2014 000090 U1.

Der Erfindung liegt die Aufgabe zugrunde, eine Lösung zu schaffen, die auf konstruktiv einfache Weise und kostengünstig eine vereinfachte, verbesserte und effektivere Rollleinenvorrichtung bereitstellt und die Nachteile bei bekannten Rollleinenvorrichtungen vermeidet.

Diese Aufgabe wird erfindungsgemäß gelöst durch eine Rollleinenvorrichtung für das Ab- und Aufrollen einer Tierleine mit den Merkmalen gemäß dem Patentanspruch 1.

Die erfindungsgemäße Rollleinenvorrichtung für das Ab- und Aufrollen einer Tierleine weist ein Gehäuse, einen drehbar an dem Gehäuse gelagerten Spulenkörper und eine Rückholfeder auf, wobei die Rückholfeder den Spulenkörper in eine Aufrollposition, in welcher die Tierleine auf dem Spulenkörper aufgewickelt angeordnet ist, zurückdrängend oder zurückhaltend ausgebildet ist, wobei der Spulenkörper aus der Aufrollposition heraus gegen eine Rückholkraft der Rückholfeder für ein Abrollen der aufgewickelten Tierleine drehbar ist, wobei eine Bremsvorrichtung mit einem zum Abbremsen des sich drehenden Spulenkörpers ausgebildeten Bremselement vorgesehen ist, wobei die Bremsvorrichtung derart ausgebildet ist, dass das Bremselement den Spulenkörper infolge einer durch das Abrollen der Tierleine bewirkten Tierleinen-Spannung automatisch erzeugten Bremskraft bremst, und wobei die Bremsvorrichtung eine Brems-Umlenkvorrichtung aufweist, an welcher die Tierleine umgelenkt geführt ist und welche relativ zu dem Spulenkörper bewegbar an dem Gehäuse gelagert ist und welche zum Übertragen der Tierleinen-Spannung auf das Bremselement ausgebildet ist.

Vorteilhafte und zweckmäßige Ausgestaltungen und Weiterbildungen der Erfindung ergeben sich aus den entsprechenden Unteransprüchen.

Durch die Erfindung wird eine Rollleinenvorrichtung bereitgestellt, mit welcher auf konstruktiv einfache Weise die vorstehend genannten Probleme gelöst werden. Die erfindungsgemäße, selbstaufwickelnde Rollleinenvorrichtung weist eine Bremsvorrichtung auf, welche derart ausgebildet ist, dass das Bremselement den Spulenkörper infolge einer durch das Abrollen der Tierleine bewirkten Tierleinen-Spannung automatisch erzeugten Bremskraft bremst. Im Sinne der Erfindung ist unter "Bremsen" sowohl ein durch Reibwirkung erzeugtes Blockieren des Spulenkörpers gegen weiteres Abwickeln der Tierleine als auch ein durch Reibwirkung erzeugtes Abbremsen des Spulenkörpers und damit ein verlangsamtes Abwickeln der Tierleine zu verstehen. Mit Hilfe der erfindungsgemäßen Rollleinenvorrichtung ist es möglich, dass das Bremselement den Spulenkörper infolge einer durch das Abrollen der Tierleine bewirkten Tierleinen-Spannung automatisch erzeugten Bremskraft bremst, bevor das Ende der Tierleine erreicht ist. Auf diese Weise wird durch die Erfindung eine Rollleinenvorrichtung zur Verfügung gestellt, welche eine automatische Bremsfunktion aufweist, nämlich dann, wenn die Seilspannung bzw. Tierleinen-Spannung durch das sich von der Rollleinenvorrichtung wegrennende Tier derart hoch ist, dass die Bremsvorrichtung das Drehen des Spulenkörpers automatisch abbremst bzw. bremst. Da die Tierleinen-Spannung über die Brems-Umlenkvorrichtung zur Bremskraft beiträgt, kann die Bremskraft variiert werden, indem der Leinenführer bzw. Benutzer der Rollleinenvorrichtung die Tierleine in Bezug auf das Gehäuse und damit die Brems-Umlenkvorrichtung derart hält, dass über die Umlenkung der Tierleine weniger, gar keine oder mehr Kraft auf das Bremselement übertragen wird.

Von besonderem Vorteil im Hinblick auf einen minimalen Bauraum ist es in Ausgestaltung der Erfindung, wenn die Bremsvorrichtung einen Bremshebel aufweist, welcher an einer Schwenkachse an dem Gehäuse gelagert ist und an welchem das Bremselement angebracht sind.

Damit ein automatisches Aufrollen der Tierleine sichergestellt ist und der Bremshebel das automatische Aufrollen nicht verhindert, ist in Ausgestaltung der Erfindung vorgesehen, dass der Bremshebel gegen die Kraft eines Rückstellelements aus einer Ruhestellung, in welcher der Spulenkörper sich frei drehen kann, in eine Bremsstellung, in welcher die Bremskraft des Bremselements eine Drehung des Spulenkörper abbremst, bewegbar ausgebildet ist. Durch konstruktive Abstimmung der Rückholfeder, deren Rückholkraft die Tierleinen-Spannung bestimmend ausgebildet ist, des Rückstellelements des Bremselements und eines Reibungskoeffizienten kann die Rollleinenvorrichtung derart ausgelegt werden, dass eine Bremswirkung von gar keinem Bremsen bis hin zu einem Blockieren allein durch die Ausrichtung des Gehäuses relativ zu der Tierleine bestimmt sein kann. Wird das Gehäuse derart gedreht gehalten, dass eine Kraftkomponente auf das Bremselement drückt, so entsteht eine Bremswirkung.

Zur Vermeidung von Beschädigungen der Rollleinenvorrichtung ist es in Ausgestaltung der Erfindung von besonderem Vorteil, wenn ein Anschlagelement an dem Gehäuse angeordnet ist, welches eine Bewegung des Bremshebels in Richtung der Bremsstellung bei einer Endbremsstellung begrenzt.

Um eine Blockade beim Abrollen der Tierleine zu verhindern, sieht die Erfindung in weiterer Ausgestaltung vor, dass das Bremselement über ein Federelement derart an dem Bremshebel angebracht ist, dass bei Erreichen der Endbremsstellung ausschließlich eine maximale Federkraft des Federelements als Bremskraft auf den sich drehenden Spulenkörper wirkt.

Für ein optionales manuelles Bremsen durch den Leinenführer bzw. Benutzer der Rollleinenvorrichtung zusätzlich zu der Möglichkeit des automatischen Abbremsens sieht die Erfindung in Ausgestaltung vor, dass ein Bremsschalter bewegbar an dem Gehäuse gelagert ist, wobei die Bremsvorrichtung ferner derart ausgebildet ist, dass das Bremselement den Spulenkörper infolge einer durch eine manuelle Betätigung des Bremsschalters und/oder infolge der durch das Abrollen der Tierleine bewirkten Tierleinen-Spannung automatisch erzeugten Bremskraft bremst. Mit Hilfe des Bremsschalters ist es bei der erfindungsgemäßen Rollleinenvorrichtung dann möglich, dass (erstens) das Bremselement den Spulenkörper infolge einer durch eine manuelle Betätigung des Bremsschalters erzeugten Bremskraft bremst, oder dass (zweitens) das Bremselement den Spulenkörper infolge einer durch das Abrollen der Tierleine bewirkten Tierleinen-Spannung automatisch erzeugten Bremskraft bremst, oder dass (drittens) das Bremselement den Spulenkörper infolge einer durch eine manuelle Betätigung des Bremsschalters und einer durch das Abrollen der Tierleine bewirkten Tierleinen-Spannung automatisch erzeugten Bremskraft bremst, bevor das Ende der Tierleine erreicht ist. Auf diese Weise wird durch die Erfindung eine Rollleinenvorrichtung zur Verfügung gestellt, welche eine automatische Bremsfunktion mit gegebenenfalls Bremskraftverstärkung aufweist, nämlich dann, wenn der Bremsschalter betätigt wird und gleichzeitig die Seilspannung bzw. Tierleinen-Spannung durch das sich von der Rollleinenvorrichtung wegrennende Tier derart hoch ist, dass die Bremsvorrichtung selbstverstärkend das Drehen des Spulenkörpers bremst.

Von konstruktiv besonderem Vorteil hinsichtlich eines minimalen Platzbedarfs ist es in weiterer Ausgestaltung der Erfindung, wenn der Bremsschalter an dem Bremshebel angebracht ist.

Konstruktiv besonders vorteilhaft ist es in weiterer Ausgestaltung der Erfindung, wenn der Bremshebel als ein einseitiger Hebel ausgebildet ist und die Brems-Umlenkvorrichtung an dem freien Ende des Hebels angeordnet ist.

Für ein automatisches Bremsen des sich drehenden Spulenkörpers ist es konstruktiv von Vorteil, wenn die Brems-Umlenkvorrichtung als eine drehbar gelagerte und relativ zum Spulenkörper bewegbare Umlenkrolle ausgebildet ist.

Alternativ für ein automatisches Bremsen des sich drehenden Spulenkörpers kann es in anderer Ausgestaltung von Vorteil sein, wenn die Brems-Umlenkvorrichtung als eine Durchgangsöffnung ausgebildet ist, welche relativ zu dem Gehäuse und zu dem Spulenkörper bewegbar ist.

Konstruktiv besonders vorteilhaft ist es dann, wenn in weiterer Ausgestaltung der Erfindung die Durchgangsöffnung an dem Bremshebel ausgebildet ist.

Für ein automatisches Bremsen des sich drehenden Spulenkörpers sieht die Erfindung in vorteilhafter Weise ferner vor, dass der Spulenkörper mit einer Begrenzungsvorrichtung mechanisch gekoppelt ist und die Begrenzungsvorrichtung nach einer vorgegebenen Anzahl an Umdrehungen des Spulenkörpers den Bremshebel in Richtung der Bremsstellung drängend ausgebildet ist. Auf diese Weise erfolgt ein Bremsen des sich abwickelnden Spulenkörpers bereits vor dem Erreichen des Endes der Tierleine.

Schließlich ist es in weiterer Ausgestaltung der Erfindung von baulichem Vorteil, dass das Bremselement eine Bremsbacke aufweist, welche zum Bremsen des sich drehenden Spulenkörpers in Anlage an eine Bremsfläche des Spulenkörpers bringbar ausgebildet ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit den Zeichnungen, in denen beispielhaft bevorzugte Ausführungsbeispiele der Erfindung dargestellt sind.

In der Zeichnung zeigt:
Figur 1 eine schematische Darstellung einer erfindungsgemäßen Rollleinenvorrichtung gemäß einer ersten Ausführungsform,
Figur 2 eine schematische Darstellung der in Figur 1 gezeigten Rollleinenvorrichtung, bei welcher eine Bremskraft infolge einer manuellen Betätigung eines Bremsschalters erzeugt wird,
Figur 3 eine schematische Darstellung der in Figur 1 gezeigten Rollleinenvorrichtung, bei welcher eine Bremskraft infolge einer manuellen Betätigung des Bremsschalters und zusätzlich infolge einer durch das Abrollen einer Tierleine bewirkten Tierleinen-Spannung automatisch erzeugt wird,
Figur 4 eine schematische Darstellung einer erfindungsgemäßen Rollleinenvorrichtung gemäß einer zweiten Ausführungsform mit einer Begrenzung einer Bremskraft,
Figur 5 eine schematische Darstellung der Rollleinenvorrichtung aus Figur 4 mit nachlassender Tierleinen-Spannung,
Figur 6 eine schematische Darstellung einer erfindungsgemäßen Rollleinenvorrichtung gemäß einer dritten Ausführungsform mit einer Längenbegrenzung für das Abrollen der Tierleine,
Figur 7 eine perspektivische Ansicht auf eine erfindungsgemäße Rollleinenvorrichtung gemäß einer vierten Ausführungsform,
Figur 8 eine weitere Perspektivansicht der in Figur 7 gezeigten Rollleinenvorrichtung, wobei eine Gehäusehälfte der Rollleinenvorrichtung ausgeblendet ist, und
Figur 9 eine Draufsicht auf die in Figur 8 gezeigte Rollleinenvorrichtung.

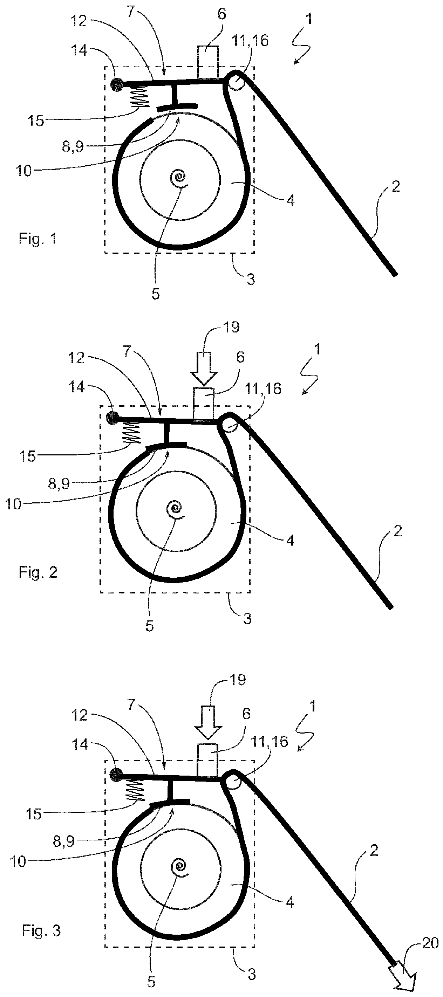

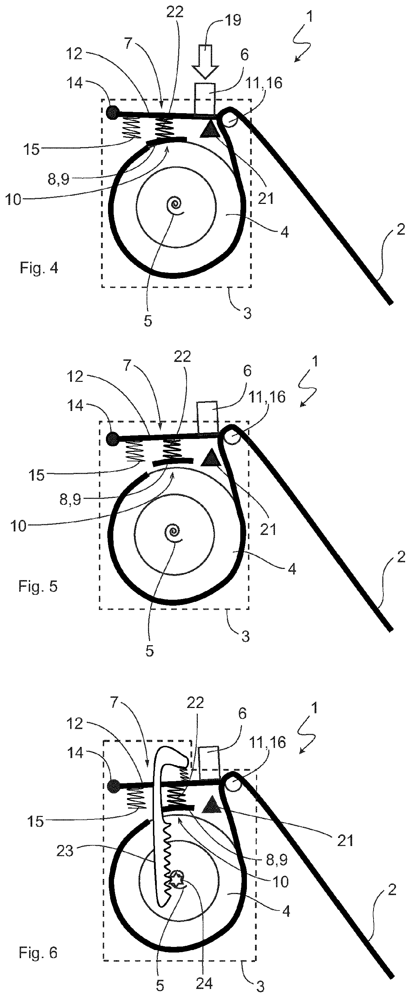

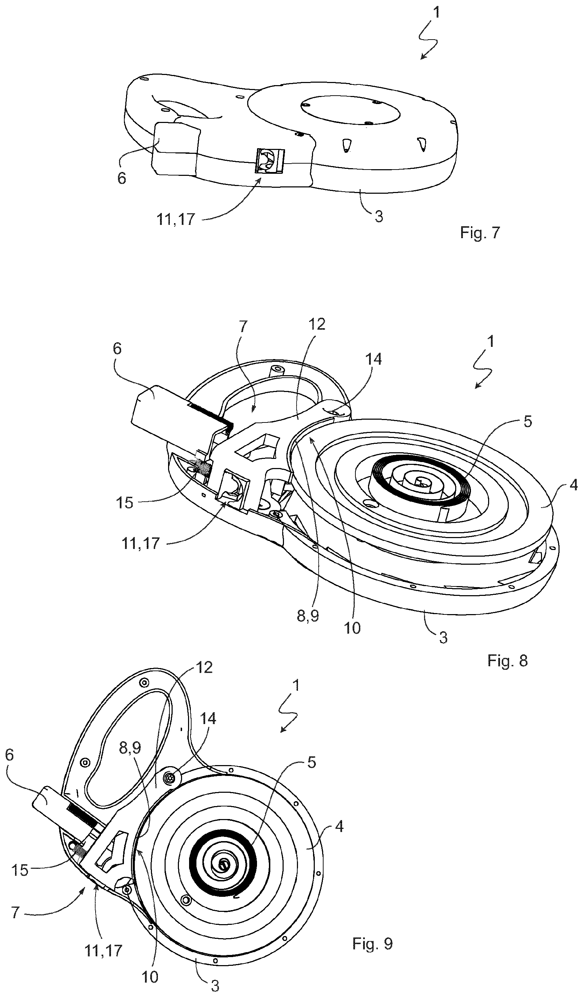

Die Figuren 1 bis 9 zeigen verschiedene Ausführungsformen einer erfindungsgemäßen Rollleinenvorrichtung 1, wobei die Figuren 1 bis 3 eine erste Ausführungsform zeigen, in den Figuren 4 und 5 eine zweite Ausführungsform dargestellt ist, die Figur 6 eine dritte Ausführungsform zeigt und in den Figuren 7 bis 9 eine vierte Ausführungsform dargestellt ist. In den Figuren 1 bis 9 beziehen sich gleiche Bezugszeichen auf gleiche Bauteile, so dass die Beschreibung für solche Bauteile allgemeingültig für alle Ausführungsformen zu verstehen ist, auch wenn dies nicht explizit bei der Beschreibung der einzelnen Figuren erwähnt wird.

Aus allen Figuren ist der allgemeine Aufbau der erfindungsgemäßen Rollleinenvorrichtung 1 ersichtlich, so dass sich die nachstehende Beschreibung auf alle Figuren bezieht, wobei in den Figuren 1 bis 7 die Rollleinenvorrichtung lediglich schematisch dargestellt ist. Die Rollleinenvorrichtung 1 für das Ab- und Aufrollen einer Tierleine 2 (nur in den Figuren 1 bis 6 gezeigt) weist ein Gehäuse 3 (in den Figuren 1 bis 6 gestrichelt angedeutet), einen drehbar an dem Gehäuse 3 gelagerten Spulenkörper 4 und eine Rückholfeder 5 auf. Die Rückholfeder 5 ist derart ausgebildet, dass die Rückholfeder 5 den Spulenkörper 4 in eine Aufrollposition, in welcher die Tierleine 2 auf dem Spulenkörper 4 aufgewickelt angeordnet ist, zurückdrängt oder zurückhält. Dabei ist der Spulenkörper 4 aus der Aufrollposition heraus gegen eine Rückholkraft der Rückholfeder 5 für ein Abrollen der aufgewickelten Tierleine 2 drehbar. Ferner ist ein Bremsschalter 6 vorgesehen, welcher an dem Gehäuse 3 bewegbar gelagert ist. Erfindungsgemäß weist die Rollleinenvorrichtung 1 eine Bremsvorrichtung 7 auf. Die Bremsvorrichtung 7 selbst weist ein Bremselement 8 auf. Das Bremselement 8 ist dabei zum Abbremsen des sich drehenden Spulenkörpers 4 ausgebildet, wenn die Tierleine 2 sich abrollt. Wie aus den Figuren ersichtlich ist, kann das Bremselement 8 eine Bremsbacke 9 aufweisen, welche zum Bremsen des sich drehenden Spulenkörpers 4 in Anlage an eine Bremsfläche 10 des Spulenkörpers 4 bringbar ausgebildet ist. Dabei kann die Bremsfläche 10 als ein Abschnitt einer Umfangswand des Spulenkörpers 4 ausgebildet sein.

Erfindungsgemäß ist die Bremsvorrichtung 7 derart ausgebildet, dass das Bremselement 8 den Spulenkörper 4 infolge einer manuellen Betätigung des Bremsschalters 6 und/oder infolge einer durch das Abrollen der Tierleine 2 bewirkten Tierleinen-Spannung automatisch erzeugten Bremskraft bremst, wie nachstehend noch im Detail erläutert wird. Durch die erfindungsgemäße Ausbildung ist es damit möglich, dass (erstens) das Bremselement 8 den Spulenkörper 4 infolge einer durch eine manuelle Betätigung des Bremsschalters 6 erzeugten Bremskraft bremst, oder dass (zweitens) das Bremselement 8 den Spulenkörper 4 infolge einer durch das Abrollen der Tierleine 2 bewirkten Tierleinen-Spannung automatisch erzeugten Bremskraft bremst, oder dass (drittens) das Bremselement 8 den Spulenkörper 4 infolge einer durch eine manuelle Betätigung des Bremsschalters 6 und zusätzlich einer durch das Abrollen der Tierleine 2 bewirkten Tierleinen-Spannung automatisch erzeugten Bremskraft bremst, bevor das Ende der Tierleine erreicht ist. Die zweite und dritte Art des Bremsens werden erfindungsgemäß dadurch realisiert, dass die Bremsvorrichtung 7 eine Brems-Umlenkvorrichtung 11 aufweist, an welcher die Tierleine 2 umgelenkt geführt ist und welche relativ zu dem Spulenkörper 4 bewegbar an dem Gehäuse 3 gelagert ist und welche zum Übertragen der Tierleinen-Spannung auf das Bremselement ausgebildet ist. Dadurch kann entweder die Bremskraft des Bremsschalters 6 verstärkt werden oder aber es tritt ein automatisches Bremsen bei nicht betätigtem Bremsschalter 6 ein, wenn sich das Tier entsprechend schnell von dem Tierleinenführer entfernt und die Tierleine 2 entsprechend schnell von dem Spulenkörper 4 abwickelt.

Mit Bezug auf die Figuren 1 bis 9 ist zu erkennen, dass die Bremsvorrichtung 7 einen Bremshebel 12 aufweist. Der Bremshebel 12 ist an einer Schwenkachse 14 an dem Gehäuse 3 gelagert. An dem Bremshebel 12 sind ferner der Bremsschalter 6 und das Bremselement 8 angebracht. Dabei ist der Bremshebel 12 gegen die Kraft eines Rückstellelements 16 aus einer Ruhestellung (siehe zum Beispiel Figuren 1, 5 und 6), in welcher der Spulenkörper 4 sich frei drehen kann, in eine Bremsstellung (siehe zum Beispiel Figuren 2 bis 4), in welcher die Bremskraft des Bremselements 8 eine Drehung des Spulenkörper 4 abbremst, bewegbar ausgebildet. Wie den Figuren 1 bis 9 weiter zu entnehmen ist, ist der Bremshebel 12 als ein einseitiger Hebel ausgebildet, wobei in den gezeigten Ausführungsbeispielen der Figuren 1 bis 9 die Brems-Umlenkvorrichtung 11 an dem freien Ende des Hebels angeordnet ist. Es sind aber auch andere Anordnungen der Brems-Umlenkvorrichtung 11 an dem Bremshebel 12 denkbar.

In den Figuren 1 bis 6 ist die Brems-Umlenkvorrichtung 11 als eine drehbar gelagerte und relativ zum Spulenkörper 4 bewegbare Umlenkrolle 16 ausgebildet.

Die Figuren 1 bis 3 zeigen eine erste Ausführungsform der erfindungsgemäßen Rollleinenvorrichtung 1, deren Aufbau vorstehend beschrieben wurde. In Figur 1 hält das Rückstellelement 15, welches als Federelement ausgebildet ist, den Bremshebel 12 in seiner Ruhestellung, so dass das Bremselement 8 beabstandet zu dem Spulenkörper 4 angeordnet ist und kein Bremsen einer Umdrehung des Spulenkörpers 4 erfolgt. Die Tierleinen-Spannung der Tierleine 2 in Figur 1 ist vernachlässigbar gering, so dass die Rückholkraft der Rückholfeder 5 dieser Tierleinen-Spannung wiedersteht und die Bremsvorrichtung 7 nicht ausgelöst wird. In Figur 2 wird im Unterschied zur Figur 1 der Bremsschalter 6 vom Benutzer der Rollleinenvorrichtung 1 betätigt und mit einer Betätigungskraft 19 gedrückt. Diese Betätigungskraft 19 führt durch den Bremshebel 12 infolge der Hebelwirkung zu einer verstärkten Bremskraft bzw. einem verstärktem Bremsdruck des Bremselements 8 auf die Bremsfläche 10, so dass eine Drehung des Spulenkörpers 4 und damit ein Abrollen der Tierleine 2 gebremst wird. Aus dieser Bremskraft resultiert eine Seilspannung, welche das angeleinte Tier wahrnimmt. In der Figur 3 ist eine andere Situation gezeigt, bei welcher eine Betätigungskraft 19 von dem Leinenführer über den Bremsschalter 6 aufgebracht wird und bei welcher zusätzlich eine Tierleinen-Spannung durch ein sich schnell vom Leinenführer entfernendes Tier vorherrscht. Dabei wirkt die Tierleinen-Spannung über die Brems-Umlenkvorrichtung 11 nach dem Flaschenzugprinzip mit einem Faktor zusätzlich zur Betätigungskraft 19 des Leinenführers auf die Bremsvorrichtung 7 und den Bremshebel 12 ein, so dass sich die Bremskraft aus der Addition beider Kräfte ergibt. Dadurch wirkt die Bremsvorrichtung 7 als eine Art Bremskraftverstärker, wenn die Kraft durch die Tierleinen-Spannung kleiner als die Benutzerkraft ist. Wenn die Kraft durch die Tierleinen-Spannung größer als die Benutzerkraft ist, dann blockiert die Bremsvorrichtung 7 infolge ihrer Selbstverstärkung schlagartig.

In der Figur 4 ist eine zweite Ausführungsform der erfindungsgemäßen Rollleinenvorrichtung 1 gezeigt. Bei dieser Ausführungsform ist ein Anschlagelement 21 an dem Gehäuse 3 angeordnet, welches eine Bewegung des Bremshebels 12 in Richtung der Bremsstellung bei einer Endbremsstellung (siehe Figur 4) begrenzt. Durch die Begrenzung wird eine Blockade des Spulenkörpers 4 verhindert, indem die Bremskraft begrenzt wird. Die Brems-Umlenkvorrichtung 11 bzw. der Bremshebel 12 bewegt sich beim Abrollen der Tierleine 2 gegen das Anschlagelement 21, so dass von dem Bremshebel 12 nur eine Maximalkraft auf das Bremselement 8 übertragen wird, unabhängig davon, ob der Bremsschalter 6 betätigt wird und/oder eine Tierleinen-Spannung mit entsprechender Kraft auf die Brems-Umlenkvorrichtung 11 und damit auf den Bremshebel 12 wirkt. Dabei ist die Maximalkraft mit Hilfe eines Federelements 22 vorbestimmt. Wie der Figur 4 zu entnehmen ist, ist das Bremselement 8 über das Federelement 22 derart an dem Bremshebel 12 angebracht, dass bei Erreichen der Endbremsstellung (siehe Figur 4), in welcher der Bremshebel 12 an dem Anschlagelement 21 anliegt, ausschließlich eine maximale Federkraft bzw. die Maximalkraft des Federelements 22 als die Bremskraft auf den sich drehenden Spulenkörper 4 wirkt. In Figur 5 ist die zweite Ausführungsform nochmals gezeigt, allerdings in einer Situation, in welcher die Tierleinen-Spannung nachgelassen hat, wobei auch der Betätigungsdruck 19 auf den Bremsschalter 6 nicht mehr einwirkt bzw. der Leinenführer den Bremsschalter 6 nicht mehr betätigt oder drückt. In der in Figur 5 gezeigten Situation bewegt sich der Bremshebel 12 wieder mit Hilfe des Rückstellelements 15 in seine Ruhestellung zurück, wodurch die Bremsvorrichtung 7 nicht mehr aktiv und wirksam ist und sich die Tierleine 2 durch die Rückholfeder 5 wieder auf den Spulenkörper 4 aufwickelt.

In der Figur 6 ist eine dritte Ausführungsform der erfindungsgemäßen Rollleinenvorrichtung 1 gezeigt, wobei in dieser Ausführungsform alle zuvor beschriebenen Bauteile und Merkmale der ersten und zweiten Ausführungsform realisiert sind. Die dritte Ausführungsform ist um eine weitere Funktionalität ergänzt. Bei der dritten Ausführungsform wird eine Bremskraft nur in Abhängigkeit der abgerollten Länge der Tierleine 2 automatisch bewirkt, ohne dass für diesen Automatismus eine ausreichend hohe Tierleinen-Spannung durch ein sich rasch vom Leinenführer entfernendes Tier vorliegen muss. Dementsprechend ist bei der dritten und in Figur 6 gezeigten Ausführungsform vorgesehen, dass ein entsprechender Mechanismus nach einer vorgegebenen Anzahl von Umdrehungen des Spulenkörpers 4, was einer vorgegebenen Länge der abgewickelten Tierleine 2 entspricht, automatisch auslöst, so dass das Tier vor einem "Ruck" des Leinenendes zunächst eine Bremskraft spürt, die das Tier selbst über die Tierleinen-Spannung bewirkt hat. Dementsprechend ist bei der vierten Ausführungsform der Spulenkörper 4 mit einer Begrenzungsvorrichtung 23 mechanisch gekoppelt, wobei die Begrenzungsvorrichtung 23 dabei nach einer vorgegebenen Anzahl an Umdrehungen des Spulenkörpers 4 den Bremshebel 12 in Richtung der Bremsstellung drängend ausgebildet ist. Zur mechanischen Kopplung steht die nach Art einer Zahnstange ausgebildete Begrenzungsvorrichtung 23 in Eingriff mit einem Zahnrad 24, welches auf der Achse des Spulenkörpers 4 angeordnet ist.

Die Figuren 7 bis 9 zeigen eine vierte Ausführungsform der erfindungsgemäßen Rollleinenvorrichtung 1. Die vierte Ausführungsform entspricht von ihrem Aufbau her der ersten Ausführungsform, wobei an dem Gehäuse 3 ein Handgriff angeformt ist. Im Unterschied zu den anderen Ausführungsformen ist bei der vierten Ausführungsform die Brems-Umlenkvorrichtung 11 als eine Durchgangsöffnung 17 ausgebildet. Dabei ist die Durchgangsöffnung 17 relativ zu dem Gehäuse 3 und zu dem Spulenkörper 4 bewegbar. Wie insbesondere den Figuren 8 und 9 zu entnehmen ist, ist Durchgangsöffnung 17 an dem Bremshebel 12 ausgebildet ist, welcher schwenkbar an de Gehäuse 3 gelagert ist. Es versteht sich, dass Merkmale, welche zu der ersten, zweiten und dritten Ausführungsform beschrieben und schematisch in den Figuren gezeigt wurden, auch auf die vierte Ausführungsform in beliebiger Kombination übertragbar sind.

Die vorstehend beschriebene Erfindung zeichnet sich durch ein neuartiges Bremsprinzip aus, welches zu einen eine Bremskraftverstärkung bewirkt. Zum anderen kann bei geeigneter Dimensionierung der Hebelverhältnisse und Federkräfte dieses neuartige Bremsprinzip auch derart verwendet werden, um je nach Haltung des Gehäuses 3 relativ zum Tier bereits durch die Orientierung der Tierleine 2 ein Bremsen auszulösen. Dadurch ist es möglich, dass sich von dem Leinenführer entfernende Tier automatisch bremsen zu können, ohne dass zu diesem Zweck der Bremsschalter 6 von dem Leinenführer betätigt werden muss. Dieses automatische Bremsen ist möglich, indem man das Gehäuse 3 so orientiert, dass die Tierleinen-Spannung in die korrekte Richtung deutet, so dass das Bremselement 8 an den Spulenkörper 4 herangedrückt wird.

Die vorstehend beschriebene Erfindung ist selbstverständlich nicht auf die beschriebenen und dargestellten Ausführungsbeispiele beschränkt. Es ist ersichtlich, dass an den in den Zeichnungen dargestellten Ausführungsformen zahlreiche, dem Fachmann entsprechend der beabsichtigten Anwendung naheliegende Abänderungen vorgenommen werden können, ohne dass dadurch der Bereich der Erfindung, wie definiert in den Ansprüchen, verlassen wird. Zur Erfindung gehört alles dasjenige, was in der Beschreibung enthalten und/oder in den Zeichnungen dargestellt ist, einschließlich dessen, was abweichend von den konkreten Ausführungsbeispielen für den Fachmann naheliegt.

### Bezugszeichenliste

- 1: Rollleinenvorrichtung
- 2: Tierleine
- 3: Gehäuse
- 4: Spulenkörper
- 5: Rückholfeder
- 6: Bremsschalter
- 7: Bremsvorrichtung
- 8: Bremselement
- 9: Bremsbacke
- 10: Bremsfläche
- 11: Brems-Umlenkvorrichtung
- 12: Bremshebel
- 14: Schwenkachse
- 15: Rückstellelement
- 16: Umlenkrolle
- 17: Durchgangsöffnung
- 18: Betätigungskraft
- 19: Betätigungskraft
- 20: Tierleinen-Spannung
- 21: Anschlagelement
- 22: Federelement
- 23: Begrenzungsvorrichtung
- 24: Zahnrad

## Patentansprüche

1. Rollleinenvorrichtung (1) für das Ab- und Aufrollen einer Tierleine (2), wobei die Rollleinenvorrichtung (1) ein Gehäuse (3), einen drehbar an dem Gehäuse (3) gelagerten Spulenkörper (4) und eine Rückholfeder (5) aufweist,
wobei die Rückholfeder (5) den Spulenkörper (4) in eine Aufrollposition, in welcher die Tierleine (2) auf dem Spulenkörper (4) aufgewickelt angeordnet ist, zurückdrängend oder zurückhaltend ausgebildet ist,
wobei der Spulenkörper (4) aus der Aufrollposition heraus gegen eine Rückholkraft der Rückholfeder (5) für ein Abrollen der aufgewickelten Tierleine (2) drehbar ist,
wobei eine Bremsvorrichtung (7) mit einem zum Abbremsen des sich drehenden Spulenkörpers (4) ausgebildeten Bremselement (8) vorgesehen ist,
**dadurch gekennzeichnet, dass**
die Bremsvorrichtung (7) derart ausgebildet ist, dass das Bremselement (8) den Spulenkörper (4) infolge einer durch das Abrollen der Tierleine (2) bewirkten Tierleinen-Spannung automatisch erzeugten Bremskraft bremst, und
dass die Bremsvorrichtung (7) eine Brems-Umlenkvorrichtung (11) aufweist, an welcher die Tierleine (2) umgelenkt geführt ist und welche relativ zu dem Spulenkörper (4) bewegbar an dem Gehäuse (3) gelagert ist und welche zum Übertragen der Tierleinen-Spannung auf das Bremselement (8) ausgebildet ist.

2. Rollleinenvorrichtung (1) nach Anspruch 1, wobei die Bremsvorrichtung (7) einen Bremshebel (12) aufweist, welcher an einer Schwenkachse (14) an dem Gehäuse (3) gelagert ist und an welchem das Bremselement (8) angebracht sind.

3. Rollleinenvorrichtung (1) nach Anspruch 2, wobei der Bremshebel (12) gegen die Kraft eines Rückstellelements (15) aus einer Ruhestellung, in welcher der Spulenkörper (4) sich frei drehen kann, in eine Bremsstellung, in welcher die Bremskraft des Bremselements (8) eine Drehung des Spulenkörper (4) abbremst, bewegbar ausgebildet ist.

4. Rollleinenvorrichtung (1) nach Anspruch 3, wobei ein Anschlagelement (21) an dem Gehäuse (3) angeordnet ist, welches eine Bewegung des Bremshebels (12) in Richtung der Bremsstellung bei einer Endbremsstellung begrenzt.

5. Rollleinenvorrichtung (1) nach Anspruch 4, wobei das Bremselement (8) über ein Federelement (22) derart an dem Bremshebel (12) angebracht ist, dass bei Erreichen der Endbremsstellung ausschließlich eine maximale Federkraft des Federelements als Bremskraft auf den sich drehenden Spulenkörper (4) wirkt.

6. Rollleinenvorrichtung (1) nach einem der Ansprüche 2 bis 5, wobei ein Bremsschalter (6) bewegbar an dem Gehäuse (3) gelagert ist, und wobei die Bremsvorrichtung (7) ferner derart ausgebildet ist, dass das Bremselement (8) den Spulenkörper (4) infolge einer durch eine manuelle Betätigung des Bremsschalters (6) und/oder infolge der durch das Abrollen der Tierleine (2) bewirkten Tierleinen-Spannung automatisch erzeugten Bremskraft bremst.

7. Rollleinenvorrichtung (1) nach Anspruch 6, wobei der Bremsschalter (6) an dem Bremshebel (12) angebracht ist.

8. Rollleinenvorrichtung (1) nach einem der vorhergehenden Ansprüche 2 bis 7, wobei der Bremshebel (12) als ein einseitiger Hebel ausgebildet ist und die Brems-Umlenkvorrichtung (11) an dem freien Ende des Hebels angeordnet ist.

9. Rollleinenvorrichtung (1) nach einem der vorhergehenden Ansprüche, wobei die Brems-Umlenkvorrichtung (11) als eine drehbar gelagerte und relativ zum Spulenkörper (4) bewegbare Umlenkrolle (16) ausgebildet ist.

10. Rollleinenvorrichtung (1) nach einem der vorhergehenden Ansprüche 1 bis 8, wobei die Brems-Umlenkvorrichtung (11) als eine Durchgangsöffnung (17) ausgebildet ist, welche relativ zu dem Gehäuse (3) und zu dem Spulenkörper (4) bewegbar ist.

11. Rollleinenvorrichtung (1) nach Anspruch 10, wobei die Durchgangsöffnung (17) an dem Bremshebel (12) ausgebildet ist.

12. Rollleinenvorrichtung (1) nach einem der vorhergehenden Ansprüche 1 bis 9, wobei der Spulenkörper (4) mit einer Begrenzungsvorrichtung (23) mechanisch gekoppelt ist und die Begrenzungsvorrichtung (23) nach einer vorgegebenen Anzahl an Umdrehungen des Spulenkörpers (4) den Bremshebel (12) in Richtung der Bremsstellung drängend ausgebildet ist.

13. Rollleinenvorrichtung (1) nach einem der vorhergehenden Ansprüche, wobei das Bremselement (8) eine Bremsbacke (9) aufweist, welche zum Bremsen des sich drehenden Spulenkörpers (4) in Anlage an eine Bremsfläche (10) des Spulenkörpers (4) bringbar ausgebildet ist.

## Claims

1. Retractable leash device (1) for uncoiling and coiling an animal leash (2), wherein the retractable leash device (1) comprises a housing (3), a spool body (4) rotatably mounted on the housing (3) and a return spring (5),
wherein the return spring (5) is designed to push back or hold back the spool body (4) into a coiling position in which the animal leash (2) is coiled onto the spool body (4),
wherein the spool body (4) can be rotated out of the coiling position against a return force of the return spring (5) for uncoiling the coiled animal leash (2),
wherein a braking device (7) comprises a brake element (8) designed to brake the rotating spool body (4),
**characterized in that**
the braking device (7) is designed such that the brake element (8) brakes the spool body (4) as a result of a braking force automatically generated by an animal leash tension in the animal leash caused by the uncoiling of the animal leash (2), and
wherein the braking device (7) comprises a brake deflection device (11) at which the animal leash (2) is deflected and which is mounted on the housing (3) so as to be movable relative to the spool body (4) and which is designed to transmit the animal leash tension to the brake element (8).

2. Retractable leash device (1) according to claim 1,
wherein the braking device (7) comprises a brake lever (12) which is mounted on a pivot axis (14) on the housing (3) and to which the brake element (8) is attached.

3. Retractable leash device (1) according to claim 2,
wherein the brake lever (12) is movable against the force of a return element (15) from a rest position, in which the spool body (4) can rotate freely, into a braking position, in which the braking force of the brake element (8) brakes the rotation of the spool body (4).

4. Retractable leash device (1) according to claim 3,
wherein a stop element (21) is arranged on the housing (3), which limits movement of the brake lever (12) in the direction of the braking position at an end braking position.

5. Retractable leash device (1) according to claim 4,
wherein the brake element (8) is attached to the brake lever (12) via a spring element (22) in such a way that, when the end braking position is reached, only a maximum spring force of the spring element acts as a braking force on the rotating spool body (4).

6. Retractable leash device (1) according to one of claims 2 to 5, wherein a brake switch (6) is movably mounted on the housing (3), and wherein the braking device (7) is further designed such that the brake element (8) brakes the coil body (4) as a result of a braking force automatically generated by manual actuation of the brake switch (6) and/or as a result of the animal leash tension caused by the uncoiling of the animal leash (2).

7. Retractable leash device (1) according to claim 6,
wherein the brake switch (6) is mounted on the brake lever (12).

8. Retractable leash device (1) according to one of the preceding claims 2 to 7, wherein the brake lever (12) is designed as a single-sided lever and the brake deflection device (11) is arranged at the free end of the lever.

9. Retractable leash device (1) according to one of the preceding claims, wherein the brake deflection device (11) is designed as a deflection roller (16) which is rotatably mounted and movable relative to the spool body (4).

10. Retractable leash device (1) according to one of the preceding claims 1 to 8, wherein the brake deflection device (11) is designed as a through-hole opening (17) which is movable relative to the housing (3) and to the spool body (4).

11. Retractable leash device (1) according to claim 10,
wherein the through-hole opening (17) is formed on the brake lever (12).

12. Retractable leash device (1) according to one of the preceding claims 1 to 9, wherein the spool body (4) is mechanically coupled to a limiting device (23) and the limiting device (23) is designed to push the brake lever (12) in the direction of the braking position after a predetermined number of rotations of the spool body (4).

13. Retractable leash device (1) according to one of the preceding claims, wherein the brake element (8) comprises a brake shoe (9) which is designed to be brought into contact with a brake surface (10) of the spool body (4) in order to brake the rotating spool body (4).

## Revendications

1. Dispositif à laisse enroulable (1) destiné au déroulement et à l'enroulement d'une laisse pour animal (2), le dispositif à laisse enroulable (1) comprenant un boîtier (3), un corps de bobine (4) monté rotatif sur le boîtier (3) et un ressort de retour (5),
dans lequel le ressort de retour (5) est conçu pour solliciter le corps de bobine (4) vers une position d'enroulement, dans laquelle la laisse pour animal (2) est disposée enroulée sur le corps de bobine (4), ou pour le maintenir dans ladite position d'enroulement,
dans lequel le corps de bobine (4) peut tourner depuis la position d'enroulement à l'encontre d'une force de retour du ressort de retour (5) afin de permettre le déroulement de la laisse pour animal (2) enroulée,
dans lequel il est prévu un dispositif de freinage (7) comportant un élément de freinage (8) conçu pour freiner le corps de bobine (4) en rotation,
**caractérisé en ce que**
le dispositif de freinage (7) est conçu de telle sorte que l'élément de freinage (8) freine le corps de bobine (4) au moyen d'une force de freinage générée automatiquement sous l'effet d'une tension de la laisse pour animal (2) provoquée par le déroulement de celle-ci, et
dans lequel le dispositif de freinage (7) comporte un dispositif de renvoi de freinage (11), au niveau duquel la laisse pour animal (2) est guidée avec changement de direction, ledit dispositif de renvoi de freinage étant monté mobile sur le boîtier (3) par rapport au corps de bobine (4) et étant conçu pour transmettre la tension de la laisse pour animal à l'élément de freinage (8).

2. Dispositif à laisse enroulable (1) selon la revendication 1, dans lequel le dispositif de freinage (7) comporte un levier de freinage (12), qui est monté sur le boîtier (3) de manière à pivoter autour d'un axe de pivotement (14) et sur lequel est agencé l'élément de freinage (8).

3. Dispositif à laisse enroulable (1) selon la revendication 2, dans lequel le levier de freinage (12) est conçu pour pouvoir être déplacé, à l'encontre de la force d'un élément de rappel (15), d'une position de repos, dans laquelle le corps de bobine (4) peut tourner librement, vers une position de freinage, dans laquelle la force de freinage de l'élément de freinage (8) freine la rotation du corps de bobine (4).

4. Dispositif à laisse enroulable (1) selon la revendication 3, dans lequel un élément de butée (21) est disposé sur le boîtier (3), ledit élément de butée limitant le déplacement du levier de freinage (12) en direction de la position de freinage à une position de freinage de fin de course.

5. Dispositif à laisse enroulable (1) selon la revendication 4, dans lequel l'élément de freinage (8) est agencé sur le levier de freinage (12) par l'intermédiaire d'un élément à ressort (22), de telle sorte que, lorsque la position de freinage de fin de course est atteinte, seule une force de ressort maximale de l'élément à ressort agit en tant que force de freinage sur le corps de bobine (4) en rotation.

6. Dispositif à laisse enroulable (1) selon l'une quelconque des revendications 2 à 5, dans lequel un organe d'actionnement de freinage (6) est monté mobile sur le boîtier (3), et dans lequel le dispositif de freinage (7) est en outre conçu de telle sorte que l'élément de freinage (8) freine le corps de bobine (4) au moyen d'une force de freinage générée automatiquement sous l'effet d'un actionnement manuel de l'organe d'actionnement de freinage (6) et/ou sous l'effet de la tension de la laisse pour animal (2) provoquée par le déroulement de celle-ci.

7. Dispositif à laisse enroulable (1) selon la revendication 6, dans lequel l'organe d'actionnement de freinage (6) est agencé sur le levier de freinage (12).

8. Dispositif à laisse enroulable (1) selon l'une quelconque des revendications 2 à 7, dans lequel le levier de freinage (12) est réalisé sous la forme d'un levier à un seul bras et le dispositif de renvoi de freinage (11) est disposé à l'extrémité libre du levier.

9. Dispositif à laisse enroulable (1) selon l'une quelconque des revendications précédentes, dans lequel le dispositif de renvoi de freinage (11) est réalisé sous la forme d'un galet de renvoi (16) monté rotatif, qui est mobile par rapport au corps de bobine (4).

10. Dispositif à laisse enroulable (1) selon l'une quelconque des revendications 1 à 8, dans lequel le dispositif de renvoi de freinage (11) est réalisé sous la forme d'une ouverture traversante (17), qui est mobile par rapport au boîtier (3) et au corps de bobine (4).

11. Dispositif à laisse enroulable (1) selon la revendication 10, dans lequel l'ouverture traversante (17) est ménagée dans le levier de freinage (12).

12. Dispositif à laisse enroulable (1) selon l'une quelconque des revendications 1 à 9, dans lequel le corps de bobine (4) est couplé mécaniquement à un dispositif de limitation (23), et le dispositif de limitation (23) est conçu pour solliciter le levier de freinage (12) en direction de la position de freinage après un nombre prédéterminé de tours du corps de bobine (4).

13. Dispositif à laisse enroulable (1) selon l'une quelconque des revendications précédentes, dans lequel l'élément de freinage (8) comporte une mâchoire de frein (9), qui est conçue pour pouvoir être amenée en contact avec une surface de freinage (10) du corps de bobine (4) afin de freiner le corps de bobine (4) en rotation.
